# EUROPÄISCHE PATENTSCHRIFT

(11) **EP 1 013 959 B1**
(45) Veröffentlichungstag und Bekanntmachung des Hinweises auf die Patenterteilung: **25.09.2002**
(21) Anmeldenummer: 99122063.3
(22) Anmeldetag: 17.11.1999
(51) Int. Cl.: F16D 65/56

(54) **Hydraulisch betriebener Radbremszylinder zur Betätigung der Bremsbacken einer Trommelbremse**
Hydraulic brake cylinder for actuating the brake shoes of a drum brake
Cylindre de frein hydraulique pour actionner les machoires d'un frein à tambour

(30) Priorität: 17.12.1998 DE 19858319
(43) Veröffentlichungstag der Anmeldung: 28.06.2000
(73) Patentinhaber: Volkswagen Aktiengesellschaft, 38436 Wolfsburg (DE)
(72) Erfinder: Sintram, Ulf, 38547 Calberlah (DE)

(56) Entgegenhaltungen:
- DE-A- 2 401 384
- GB-A- 1 513 740
- US-A- 3 838 757
- US-A- 4 611 691
- US-A- 4 792 021

## Beschreibung

Die Erfindung bezieht sich auf einen hydraulisch betriebenen Radbremszylinder zur Betätigung der Bremsbacken einer Trommelbremse für ein Kraftfahrzeug mit den Merkmalen des Oberbegriffes von Patentanspruch 1. Weiterhin bezieht sich die Erfindung auf eine Trommelbremse mit einem solchen Radbremszylinder.

Im Stand der Technik sind verschiedenartig ausgeführte hydraulisch betriebene Radbremszylinder bekannt. Grundsätzlich unterscheidet man zwischen doppelt wirkenden Radbremszylindern mit zwei Bremskolben und einfach wirkenden Radbremszylindern mit nur einem Bremskolben. Im Radbremszylinder wirkt der erzeugte hydraulische Druck auf die Bremskolben und erzeugt so die Spannkraft zum Anlegen der Bremsbacken. Hierzu wirken die Bremskolben auf die Bremsbacken bzw. auf die Bremsträger entsprechend ein, um diese zu spreizen. So werden die doppelt wirkenden Radbremszylinder insbesondere bei einer als Duo-Servo-Bremse ausgeführten Trommelbremse eingesetzt.

Insbesondere während des Fahr-Bremsbetriebs tritt an den Reibflächen der Bremsbacken ein entsprechender Reibverschleiß auf. Um diesen Reibverschleiß zu kompensieren und um immer eine optimale Anlage der Bremsbacken im Inneren des Trommelgehäuses der Trommelbremse zu gewährleisten, sind verschiedenartig ausgebildete Nachstellvorrichtungen bekannt, um das sich aufgrund des Reibbelagverschleißes allmählich vergrößernde Lüftspiel zwischen Bremsbelag und Trommelgehäuse entsprechend zu kompensieren. Es existieren im Stand der Technik entsprechende Nachstellvorrichtungen, die einerseits von Hand bedient werden müssen oder andererseits selbsttätig (automatisch) ausgebildet sind.

Bei automatisch ausgebildeten Nachstellvorrichtungen sind die Nachstellvorrichtungen zumeist im Bereich der Druckstange angeordnet. Hierbei besteht die Druckstange aus einem Nachstellrohr, einer Nachstellschraube und einem Nachstellritzel. Der in der auflaufenden Bremsbacke gelagerte Nachstellhebel wird durch eine Nachstellfeder vorgespannt. Bei Betätigung der Betriebsbremse werden die Bremsbacken gespreizt. Durch die Abstandsvergrößerung wird der Nachstellhebel von der Nachstellfeder nach unten verdreht. Liegt seine Nase an der steilen Flanke des Nachstellritzels an, so wird das Nachstellritzel um den Weg des Lüftspiels gedreht. Die Druckstange wird hierdurch "verlängert" und die Bremse wird nachgestellt.

Aus der DE 24 01 384 A1 ist weiterhin bekannt, eine Nachstellvorrichtung zwischen einem Radbremszylinder und einer Bremsbacke anzuordnen. Die Nachstellvorrichtung umfaßt eine Stirnverzahnung, die bei Überschreitung eines Lüftspiels ausgehoben wird. In diesem Zustand wird eine Verstellung zum Zweck einer Wegverlängerung einer Mutter/Splndelanordnung vorgenommen.

Vielen im Stand der Technik bekannten mechanisch ausgebildeten Nachstellvorrichtungen ist gemeinsam, daß diese zusätzlich zum Radbremszylinder im Bereich zwischen den Bremsbacken angeordnet sind und eine schrittweise Nachstellung bzw. Einstellung des relativen Abstandes der Bremsbacken zueinander gewährleisten. Ein Beispiel hierfür ist aus der US 3,838,757 A bekannt.

Die Anordnung dieser bekannten mechanischen Nachstellvorrichtungen ist nicht ganz unproblematisch. Einerseits benötigen die Nachstellvorrichtungen im Bereich der Trommelbremse immer einen gewissen Raumbedarf, andererseits müssen die Nachstellvorrichtungen auch derart angeordnet sein, daß die Wartung für eine Trommelbremse, insbesondere bei einem Austausch der Bremsbacken zur Erneuerung der Reibflächen, nicht unnötig arbeitsaufwendig ist.

Ein Radbremszylinder der eingangs genannten Art, bei dem die Nachstellvorrichtung in den Radbremszylinder integriert ist, ist aus der US 4,792,021 bekannt. Als weiteres Beispiel für einen solchen Radbremszylinder wird die US 4,611,691 A genannt.

Der Erfindung liegt die Aufgabe zugrunde, das Konstruktionsprinzip des eingangs genannten hydraulischen Radbremszylinders unter Berücksichtigung eines geringen Raumbedarfs und Wartungsaufwands weiterzubilden und eine technische Alternativlösung zu schaffen.

Hierzu wird ein Radbremszylinder mit den Merkmalen des Patentanspruches 1 vorgeschlagen.

Die Nachstellvorrichtung bleibt dabei weiterhin innerhalb des Radbremszylinders, nämlich im entsprechenden Zwischenraum zwischen den beiden Bremskolben angeordnet. Hierdurch kann ein geringer Raumbedarf und Wartungsaufwand für die Trommelbremse gewährleistet werden. Der zur Verfügung stehende Raum zur Ausführung von Wartungsarbeiten ist entsprechend groß.

Vorteilhafte Ausgestaltungen des Radbremszylinder sind in den weiteren Patentansprüchen angegeben. Überdies wird eine Trommelbremse mit einem solchen Radbremszylinder angegeben.

Im einzelnen wird nun ein bevorzugtes Ausführungsbeispiel des erfindungsgemäßen Radbremszylinders anhand der folgenden Zeichnung und Beschreibung näher beschrieben. Die Zeichnung zeigt
- Fig. 1: den erfindungsgemäßen Radbremszylinder in einer schematischen perspektivischen Darstellung,
- Fig. 2: den erfindungsgemäßen Radbremszylinder in einer schematischen geschnittenen Darstellung von oben,
- Fig. 3: den erfindungsgemäßen Radbremszylinder in einer geschnittenen Darstellung von der Seite,
- Fig. 4: eine Explosionsdarstellung in einer perspektivischen schematischen Darstellung der zwischen den Bremskolben angeordneten mechanischen Nachstellvorrichtung,
- Fig. 5: die zwischen den Bremskolben wirkende Nachstellvorrichtung in einer schematischen Darstellung von der Seite, und
- Fig. 6: die zwischen den Bremskolben wirkende mechanische Nachstellvorrichtung in einer schematischen Darstellung von oben.

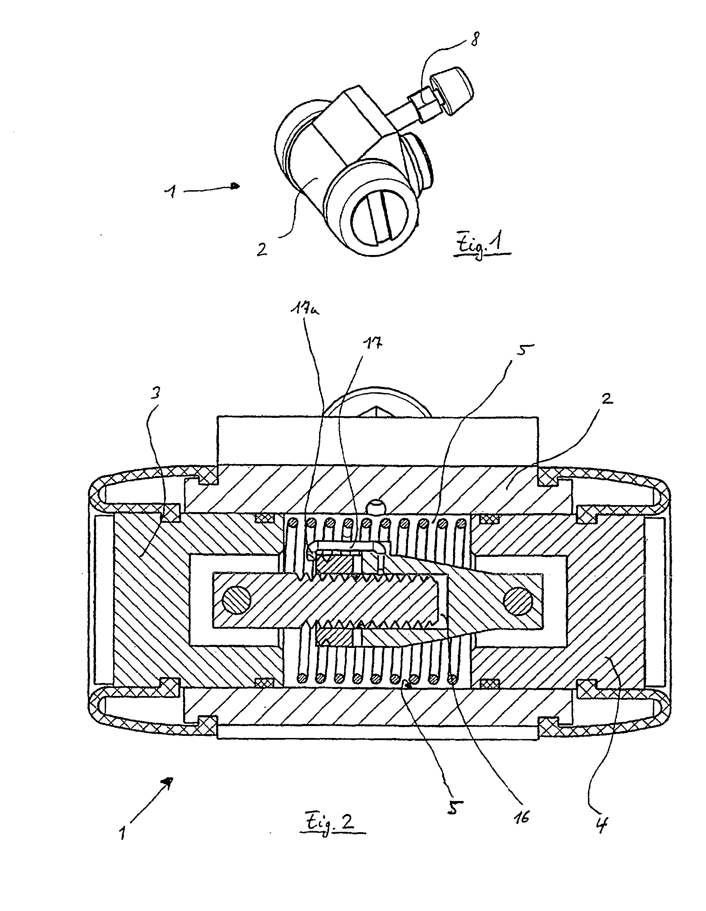

Die Fig. 1 bis 3 zeigen einen hydraulisch betriebenen Radbremszylinder 1 zur Betätigung der nicht dargestellten Bremsbacken einer nicht dargestellten Trommelbremse für ein Kraftfahrzeug. In einem Gehäuse 2 sind ein erster und ein zweiter Bremskolben 3 und 4 axial verschiebbar gelagert und die Bremskolben 3 und 4 bewirken - im montierten Zustand des Radbremszylinders 1 - die entsprechende Betätigung der Bremsbacken der Trommelbremse bzw. eine Betätigung der Bremsträger.

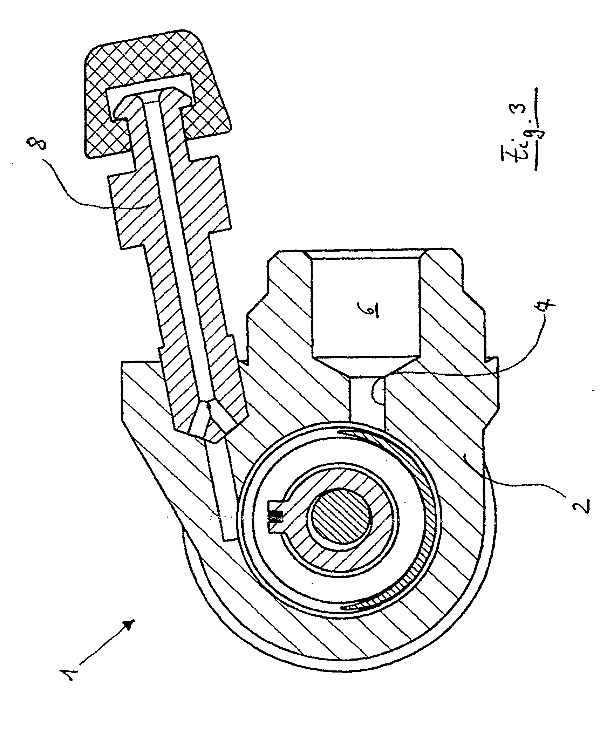

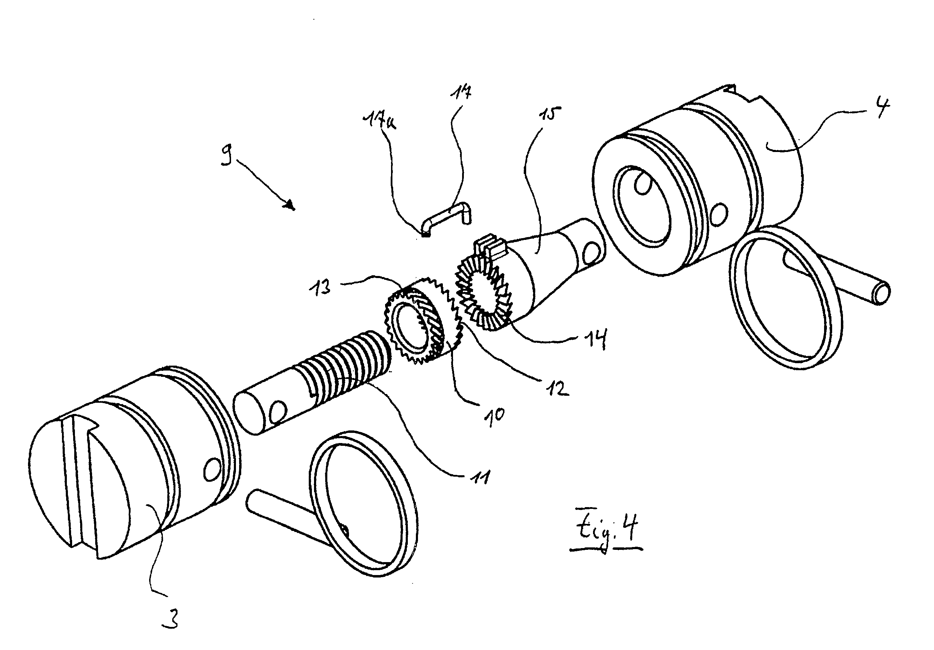

Fig. 2 zeigt den Zwischenraum 5 zwischen dem ersten Bremskolben 3 und dem zweiten Bremskolben 4, die entsprechend hydraulisch betätigt werden, wobei über die Hydraulikkammer 6 - wie in Fig. 3 dargestellt - und den Zufluß 7 der entsprechende hydraulische Druck auf die Bremskolben 3 und 4 einwirken kann. Fig. 1 und 3 zeigen die im oberen Bereich des Radbremszylinders 1 angeordnete Lüftungsschraube 8.

Die eingangs beschriebenen Nachteile werden nun dadurch vermieden, daß im Zwischenraum 5 zwischen den Bremskolben 3 und 4 eine funktional zwischen dem ersten und zweiten Bremskolben 3 und 4 wirkende, mechanisch ausgebildete Nachstellvorrichtung 9 zur Einstellung bzw. verschleißbedingten Nachstellung der Bremsbacken vorgesehen ist.

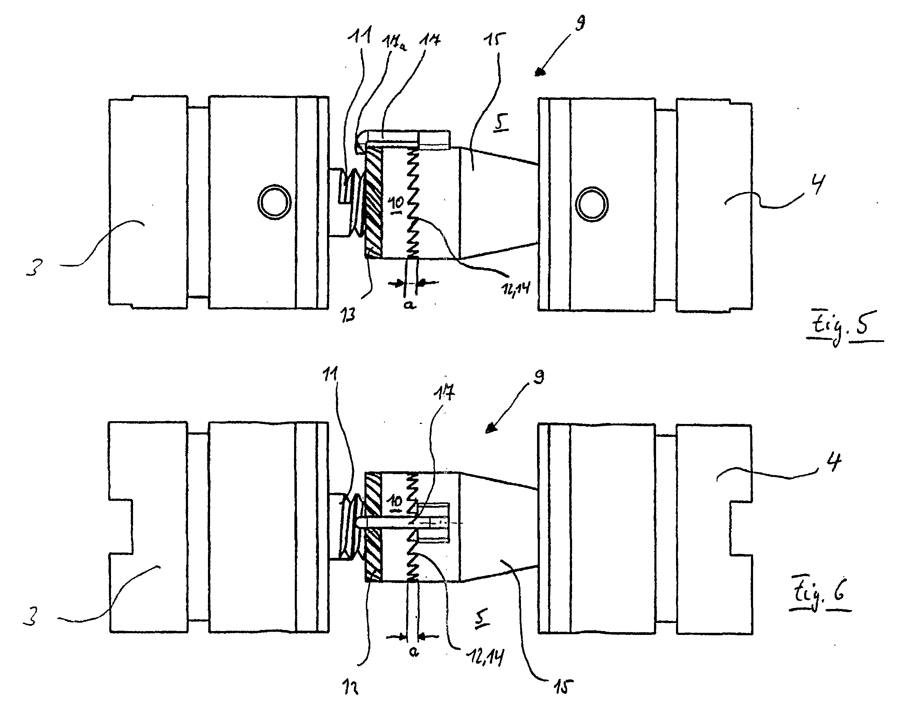

Die in Fig. 4 explosionsartig dargestellte Nachstellvorrichtung 9 ist im wesentlichen innerhalb des Radbremszylinders 1, nämlich in dem zwischen den beiden Bremskolben 3 und 4 vorhandenen Zwischenraum 5 vorgesehen ist, wodurch außerhalb des erfindungsgemäßen Radbremszylinders 1 nunmehr keine separate zusätzliche Nachstellvorrichtung innerhalb des Bereichs der Trommelbremse mehr angeordnet werden muß. Der Raumbedarf zur Durchführung von Wartungsarbeiten ist daher wesentlich vergrößert und die Wartungsarbeiten wesentlich vereinfacht. Weiterhin sind die mit der Anordnung der Nachstellvorrichtung 9 im Bereich einer Trommelbremse entsprechenden technischen "Anordnungs"-Probleme eliminiert.

Im folgenden soll die Funktionsweise der Nachstellvorrichtung 9 näher erläutert werden:

Mit Hilfe der Nachstellvorrichtung 9 ist eine schrittweise Nachstellung der Bremsbacken realisierbar. Hierzu weist die Nachstellvorrichtung 9 eine Nachstellmutter 10 mit einem hier in den Figuren nicht näher erkennbaren Innengewinde auf. Die Nachstellmutter 10 steht, wie aus den Fig. 5 und 6 ersichtlich ist, mit einem Gewindebolzen 11 in Eingriff. Der Gewindebolzen 11 ist an dem ersten Bremskolben 3 verdrehfest angeordnet. Wie die Explosionsdarstellung in Fig. 4 und die Darstellungen in den Fig. 5 und 6 erkennen lassen, weist die Nachstellmutter 10 auf der dem Gewindebolzen 11 abgewandten Seite eine Sägeverzahnung 12 und auf der dem Gewindebolzen 11 zugewandten Seite eine Schrägverzahnung 13 auf.

Die Sägeverzahnung 12 der Nachstellmutter 10 ist mit der Sägeverzahnung 14 eines Kupplungselements 15 in Eingriff bringbar bzw. außer Eingriff bringbar. Das Kupplungselement 15 ist an dem zweiten Bremskolben 4 verdrehfest angeordnet.

Die Fig. 2 läßt erkennen, daß das Kupplungselement 15 eine Ausnehmung 16 zur Aufnahme des vorderen Abschnitts des Gewindebolzens 11 aufweist. Der Gewindebolzen 11 ist innerhalb der Ausnehmung 16 des Kupplungselements 15 "verschiebbar" und wird durch die Ausnehmung 16 entsprechend geführt, steht aber mit dem Innengewinde der Nachstellmutter 10 in Eingriff.

Wie aus den Fig. 4, 5 und 6 gut zu erkennen ist, weist das Kupplungselement 15 ein Federelement 17 auf.

Das Federelement 17 ist mit der Schrägverzahnung 13 der Nachstellmutter 10 bei einer Entkupplung der Nachstellmutter 10 vom Kupplungselement 15 in Eingriff bringbar und weist hierzu eine Art Nase 17a auf.

Die Fig. 5 und 6 zeigen die Verkupplung der Nachstellmutter 10 mit dem Kupplungselement 15 und die miteinander in Eingriff stehenden Sägeverzahnungen 12 und 14. Mit dem Abstand a ist wie aus den Fig. 5 und 6 ersichtlich die Zahnhöhe der miteinander in Eingriff stehenden Sägeverzahnungen 12 bzw. 14 bezeichnet, wobei diese Zahnhöhe dem Lüftspiel der Trommelbremse im wesentlichen entspricht.

Wird nun das Lüftspiel entsprechend überschritten, d.h. es erfolgt eine entsprechende Entkupplung der Nachstellmutter 10 vom Kupplungselement 15, d.h. der Abstand zwischen Nachstellmutter 10 und Kupplungselement 15 wird entsprechend groß, so kommt die Nase 17a des Federelements 17 mit der Schrägverzahnung 13 der Nachstellmutter 10 in Eingriff und es erfolgt in Abhängigkeit der Schrägverzahnung 13 eine Verstellung bzw. Verdrehung der Nachstellmutter 10 auf den Gewindebolzen 11. Hierbei wird die Nachstellmutter 10 derart verdreht, daß der Abstand der Nachstellmutter 10 zum ersten Bremskolben 3 vergrößert wird. Das Innengewinde der Nachstellmutter 10 und das Außengewinde des Gewindebolzens 11, die miteinander in Eingriff stehen, ist bzw. selbsthemmend ausgeführt, so daß die Nachstellmutter 10 nur in der Drehrichtung verdrehbar ist, so daß der Abstand zum ersten Bremskolben 3 vergrößerbar ist.

Aufgrund der Verdrehung der Nachstellmutter 10 wird eine axiale Abstandsänderung zwischen den Bremskolben 3 und 4 realisiert, so daß, wenn nach einer entsprechenden Verdrehung der Nachstellmutter 10 die Sägeverzahnung 12 der Nachstellmutter 10 mit der Sägeverzahnung 14 des Kupplungselements 15 wieder in Eingriff kommt, hier der relative Abstand der Bremskolben 3 und 4 zueinander entsprechend vergrößert worden ist.

Durch den erfindungsgemäßen Radbremszylinder 1, der in seinem Inneren die entsprechende erfindungsgemäße Nachstellvorrichtung 9 aufweist, wird eine entsprechende Schrittnachstellung bei einem Bremsbelagverschleiß realisiert. Bei der oben geschilderten Ausführungsform sind hier die wesentlichen Bestandteile zur Funktionsweise der Nachstellvorrichtung 9 beschrieben. Unwesentlichere Bestandteile, wie beispielsweise die im Zwischenraum 5 zwischen den Bremskolben 3 und 4 angeordnete, nicht näher bezeichnete Schraubenfeder, sind hier nicht weiter erwähnt. Entscheidend ist, daß die Nachstellvorrichtung 9 innerhalb des Radbremszylinders 1 angeordnet ist, wodurch die eingangs beschriebenen Nachteile vermieden und Vorteile realisiert werden.

### BEZUGSZEICHENLISTE

- 1: Radbremszylinder
- 2: Gehäuse
- 3: erster Bremskolben
- 4: zweiter Bremskolben
- 5: Zwischenraum
- 6: Hydraulikkammer
- 7: Zufluß
- 8: Lüftungsschraube
- 9: Nachstellvorrichtung
- 10: Nachstellmutter
- 11: Gewindebolzen
- 12: Sägeverzahnung
- 13: Schrägverzahnung
- 14: Sägeverzahnung
- 15: Kupplungselement
- 16: Ausnehmung
- 17: Federelement
- 17a: Nase

- a: Abstand

## Patentansprüche

1. Hydraulisch betriebener Radbremszylinder (1) zur Betätigung der Bremsbacken einer Trommelbremse für ein Kraftfahrzeug, umfassend:
- ein Gehäuse (2),
- einen ersten Bremskolben (3) und einen zweiten Bremskolben (4), die jeweils axial verschiebbar in dem Gehäuse (2) gelagert sind und im montierten Zustand des Radbremszylinders (1) die entsprechende Betätigung der Bremsbacken bewirken, und
- eine mechanisch ausgebildete Nachstellvorrichtung (9) mit einem Gewindebolzen (11) zur Einstellung und/oder verschleißbedingten Nachstellung der Bremsbacken, die in einem Zwischenraum (5) zwischen den Bremskolben (3, 4) angeordnet ist und mit diesen funktional zusammenwirkt, **dadurch gekennzeichnet, daß** die Nachstellvorrichtung (9) den Gewindebolzen (11) an dem ersten Bremskolben (3) und ein Kupplungselement (15) an dem zweiten Bremskolben (4) aufweist, sowie eine zwischen diesen angeordnete Nachstellmutter (10), die mit dem Gewindebolzen (11) in Gewindeeingriff steht und gegen das Kupplungselement (15) über eine Verzahnung (12) abgestützt ist, und weiterhin ein Federelement (17) an dem Kupplungselement (15), das bei einer Entkupplung der Verzahnung infolge einer Überschreitung des Lüftspiels der Bremsbacken mit einem Abschnitt der Nachstellmutter (10) derart in Eingriff gelangt, um die Nachstellmutter (10) auf dem Gewindebolzen (11) zu verdrehen und dadurch den axialen Abstand zwischen den Bremskolben (3, 4) zu verändern.

2. Radbremszylinder nach Anspruch 1, **dadurch gekennzeichnet, daß** mit der Nachstellvorrichtung (9) eine schrittweise Nachstellung der Bremsbacken realisierbar ist.

3. Radbremszylinder nach Anspruch 1 oder 2, **dadurch gekennzeichnet, daß** die Nachstellmutter (10) ein Innengewinde zur Kopplung mit dem Gewindebolzen (11) aufweist.

4. Radbremszylinder nach einem der Ansprüche 1 bis 3, **dadurch gekennzeichnet, daß** die Nachstellmutter (10) als Verzahnung auf der dem Kupplungselement (15) zugewandten Seite eine Sägeverzahnung (12) und an dem Abschnitt auf der dem Kupplungselement (15) abgewandten Seite eine Schrägverzahnung (13) aufweist.

5. Radbremszylinder nach Anspruch 4, **dadurch gekennzeichnet, daß** die Sägeverzahnung (12) der Nachstellmutter (11) mit einer Sägeverzahnung (14) des Kupplungselementes (15) in Eingriff bringbar bzw. außer Eingriff bringbar ist.

6. Radbremszylinder nach einem der Ansprüche 1 bis 5, **dadurch gekennzeichnet, daß** das Kupplungselement (15) eine Ausnehmung (16) zur Aufnahme eines vorderen Abschnittes des Gewindebolzens (11) aufweist.

7. Radbremszylinder nach einem der Ansprüche 4 bis 6, **dadurch gekennzeichnet, daß** das Federelement (17) bei einer Entkupplung der Nachstellmutter (10) von dem Kupplungselement (15) mit der Schrägverzahnung (13) der Nachstellmutter (10) in Eingriff bringbar ist und hierzu eine Art Nase (17a) aufweist.

8. Radbremszylinder nach einem der Ansprüche 1 bis 7, **dadurch gekennzeichnet, daß** in dem Zwischenraum (5) zwischen den Bremskolben (3, 4) eine Schraubenfeder angeordnet ist.

9. Trommelbremse für ein Kraftfahrzeug, umfassend zwei Bremsbacken und einen zwischen den Bremsbacken angeordneten hydraulisch betriebenen Radbremszylinder (1) nach einem der Ansprüche 1 bis 8 zur Betätigung der Bremsbacken.

## Claims

1. Hydraulically operated wheel brake cylinder (1) for actuating the brake shoes of a drum brake for a motor vehicle, comprising:
- a housing (2),
- a first brake piston (3) and a second brake piston (4), which are each mounted in an axially displaceable manner in the housing (2) and, in the assembled state of the wheel brake cylinder (1), bring about the corresponding actuation of the brake shoes, and
- a mechanically constructed adjusting device (9) with a threaded bolt (11) for setting the brake shoes and/or adjusting them for wear, which is arranged in an interspace (5) between the brake pistons (3, 4) and interacts functionally with them, **characterized in that** the adjusting device (9) has the threaded bolt (11) on the first brake piston (3) and a coupling element (15) on the second brake piston (4) and has an adjusting nut (10), which is arranged between these, is in threaded engagement with the threaded bolt (11) and is supported against the coupling element (15) by means of a toothing (12), and furthermore has a spring element (17) on the coupling element (15), which, in the event of decoupling of the toothing owing to the release clearance of the brake shoes being exceeded, comes into engagement with a portion of the adjusting nut (10) so as to turn the adjusting nut (10) on the threaded bolt (11) and thereby change the axial spacing between the brake pistons (3, 4).

2. Wheel brake cylinder according to Claim 1, **characterized in that** stepwise adjustment of the brake shoes can be achieved with the adjusting device (9).

3. Wheel brake cylinder according to Claim 1 or 2, **characterized in that** the adjusting nut (10) has an internal thread for coupling to the threaded bolt (11).

4. Wheel brake cylinder according to one of Claims 1 to 3, **characterized in that** the adjusting nut (10) has sawteeth (12) as toothing on the side facing the coupling element (15) and has helical toothing (13) on the portion on the side facing away from the coupling element (15).

5. Wheel brake cylinder according to Claim 4, **characterized in that** the sawteeth (12) of the adjusting nut (11) can be moved into and out of engagement with sawteeth (14) on the coupling element (15).

6. Wheel brake cylinder according to one of Claims 1 to 5, **characterized in that** the coupling element (15) has a recess (16) to accommodate a front portion of the threaded bolt (11).

7. Wheel brake cylinder according to one of Claims 4 to 6, **characterized in that** the spring element (17) can be moved into engagement with the helical toothing (13) of the adjusting nut (10) in the event of decoupling of the adjusting nut (10) from the coupling element (15) and has a kind of nose (17a) for this purpose.

8. Wheel brake cylinder according to one of Claims 1 to 7, **characterized in that** a helical spring is arranged in the interspace (5) between the brake pistons (3, 4).

9. Drum brake for a motor vehicle, comprising two brake shoes and a hydraulically operated wheel brake cylinder (1) in accordance with one of Claims 1 to 8, arranged between the brake shoes, for actuating the brake shoes.

## Revendications

1. Cylindre de frein hydraulique (1) pour actionner les mâchoires d'un frein à tambour pour un véhicule à moteur, comprenant:
- un carter (2),
- un premier piston de frein (3) et un second piston de frein (4), qui sont chacun supportés de façon coulissante en direction axiale dans le carter (2) et qui, à l'état monté du cylindre de frein (1), actionnent de façon correspondante les mâchoires du frein, et
- un dispositif d'ajustage mécanique (9) avec une tige filetée (11) pour le réglage et/ou l'ajustage dû à l'usure des mâchoires du frein, qui est disposé dans un espace intermédiaire (5) entre les pistons de frein (3, 4) et qui coopère de manière fonctionnelle avec ceux-ci, **caractérisé en ce que** le dispositif d'ajustage (9) présente la tige filetée (11) sur le premier piston de frein (3) et un élément de couplage (15) sur le second piston de frein (4), ainsi qu'un écrou d'ajustage (10) disposé entre ceux-ci, qui est engagé sur le filet de la tige filetée (11) et qui s'applique contre l'élément de couplage (15) par une denture (12), et en outre un élément de ressort (17) sur l'élément de couplage (15), qui, en cas de débrayage de la denture par suite d'un dépassement du jeu des mâchoires du frein, vient en prise avec une portion de l'écrou d'ajustage (10) de façon à faire tourner l'écrou d'ajustage (10) sur la tige filetée (11) et ainsi à modifier la distance axiale entre les pistons de frein (3, 4).

2. Cylindre de frein hydraulique suivant la revendication 1, **caractérisé en ce que** l'on peut réaliser un ajustage pas à pas des mâchoires du frein avec le dispositif d'ajustage (9).

3. Cylindre de frein suivant la revendication 1 ou 2, **caractérisé en ce que** l'écrou d'ajustage (10) présente un filetage intérieur pour le couplage à la tige filetée (11).

4. Cylindre de frein suivant l'une quelconque des revendications 1 à 3, **caractérisé en ce que** l'écrou d'ajustage (10) présente comme denture sur le côté tourné vers l'élément de couplage (15) une denture en dents de scie (12) et sur le côté situé à l'opposé de l'élément de couplage (15) une denture oblique (13).

5. Cylindre de frein suivant la revendication 4, **caractérisé en ce que** la denture en dents de scie (12) de l'écrou d'ajustage (11) peut être embrayée, respectivement débrayée avec une denture en dents de scie (14) de l'élément de couplage (15).

6. Cylindre de frein suivant l'une quelconque des revendications 1 à 5, **caractérisé en ce que** l'élément de couplage (15) présente une cavité (16) destinée à recevoir une partie avant de la tige filetée (11).

7. Cylindre de frein suivant l'une quelconque des revendications 4 à 6, **caractérisé en ce que** l'élément de ressort (17) peut, en cas de débrayage de l'écrou d'ajustage (10) de l'élément de couplage (15), être mis en prise avec la denture oblique (13) de l'écrou d'ajustage (10) et **en ce qu'**il présente à cet effet une sorte d'ergot (17a).

8. Cylindre de frein suivant l'une quelconque des revendications 1 à 7, **caractérisé en ce qu'**un ressort hélicoïdal est disposé dans l'espace intermédiaire (5) entre les pistons de frein (3, 4).

9. Frein à tambour pour un véhicule à moteur, comprenant deux mâchoires de frein et un cylindre de frein hydraulique (1) suivant l'une quelconque des revendications 1 à 8 disposé entre les mâchoires de frein, pour actionner les mâchoires de frein.
